# EUROPÄISCHE PATENTANMELDUNG

(11) **EP 1 974 849 A1**
(43) Veröffentlichungstag der Anmeldung: **01.10.2008**
(21) Anmeldenummer: 07006363.1
(22) Anmeldetag: 28.03.2007
(51) Int. Cl.: B23K 26/24, B23K 26/32

(54) **Verfahren zur Fixierung strukturgeklebter Werkstücke, insbesondere zum Laserschweißen von geklebten Werkstücken**

(71) Anmelder: Trumpf Laser- und Systemtechnik GmbH, 71254 Ditzingen (DE)
(72) Erfinder: Schwörer, Thomas, 78713 Schramberg (DE); Faisst, Frank, 78713 Schramberg (DE); Melbert, Hubertus, 78713 Schramberg (DE)
(74) Vertreter: Maser, Jochen

(57) **Zusammenfassung**

Die Erfindung betrifft ein Verfahren zur Fixierung von strukturgeklebten Werkstücken (11, 12) mittels eines Energiestrahies (21), zwischen denen zumindest eine Klebemltteischicht (17) vorgesehen ist, deren Verdampfungstemperatur unterhalb der Schmelztemperatur des Materials der Werkstücke (11, 12) liegt, wobei während einer Verdampfungsphase des Klebemittels (17) im Einwirkbereich (19) des Energiestrahles (21) ein Dampfkanal (24) im Schmelzbad (26) zum Ausstriömen eines Dampfes aufrechterhalten wird, dass zumindest die im Einwirkbereich (19) sich befindende Klebemittelschicht (17) verdampft und durch den Dampfkanal (24) abgeführt wird und dass die Klebemittelschicht (17) mit einer Viskosität eingestellt wird, bei der aufgrund des Gasdruckes im Dampfkanal (24) ein Eintritt des verdampften Materials in die zwischen den Werkstücken (11, 12) vorgesehene KlebemlttelsCt1icht (17) verhindert wird.

## Beschreibung

Die Erfindung betrifft ein Verfahren zur Fixierung strukturgeklebter Werkstücke mittels eines Energiestrahles, insbesondere zum Laserschweißen von geklebten Werkstücken.

In der Fügetechnik ist bereits allgemein bekannt, mit einer Beschichtung und/oder einer Klebemittelschicht versehene Werkstücke, insbesondere Bleche, miteinander zu verbinden. Hierzu erfolgt eine Kombination einer Klebetechnik mit thermischen oder mechanischen Fügeverfahren, um die Bauteile miteinander zu verbinden. Eine solche Anwendung erfolgt insbesondere im modernen Fahrzeugleichtbau, um verbesserte Struktur-und Betriebsfestigkeitseigenschaften solcher Bauteile zu erzielen. Die Kombination von Kleben mit einer thermischen Fügetechnik weist bislang den Nachteil auf, dass eine geringe Prozessgeschwindigkeit zur Herstellung solcher Bauteile gegeben ist.

In einer ersten bekannten Ausführungsform zur Fixierung strukturgeklebter Werkstücke wird vorgeschlagen, im Einwirkbereich des Energiestrahles die Verwendung von Beschichtungen und/oder Klebstoffen zu vermeiden. Dieses Verfahren weist jedoch den Nachteil auf, dass eine Dichtigkeit solcher Bauteile an den Stoßstellen oder Übertappungsbereichen, in denen die stoffschlüssige Verbindung eingebracht ist, aufgrund fertigungstechnischer Toleranzen nicht gewährleistet ist. Dies kann beispielsweise zu unerwünschter Korrosion führen.

Aus der US 6,932,879 B2 geht ein Verfahren zum Schweißen verklebter Bleche hervor, bei dem die zu verbindenden Werkstücke im Überlappstoß mit einer Klebstoffschicht versehen sind. Diese Klebstoffschicht umfasst Füllkörper, welche als Abstandshalter zwischen den zu fügenden Partnern dienen. Die Füllkörper gewährleisten einen definierten Abstand zwischen den Werkstücken, der bspw. erforderlich ist, um ein Herausdrücken des Klebemittels aus dem Spalt zu verhindern. Zusätzlich wird erzielt, dass während dem stoffschlüssigen Verbinden der Werkstücke im Überlappstoß zwischen den Füllkörpern und außerhalb des Einwirkbereiches des Energiestrahles im Klebemittel-Füllkörper-Verbund Entgasungskanäle gebildet werden, wodurch das im Einwirkbereich verdampfte Material entweichen kann. Das zwischen den Werkstücken vorgesehene Klebemittel ist derart eingestellt, dass beim stoffschlüssigen Verbinden der geklebten Werkstücke Entgasungskanäle gebildet werden können, durch welche die Gase von dem Einwirkbereich durch den Überlappstoß hindurch nach Außen oder zumindest in äußere Bereiche abgeführt werden. Dabei werden ein- oder zweikomponentige ausgehärtete Klebstoffe verwendet, die dem entweichenden Gas nachgeben, um solche Entgasungs- bzw. Gasaustrittspassagen zu bilden. Dieses Verfahren weist jedoch den Nachteil auf, dass dies Entgasurigskanäle nach dem stoffschlüssigen Verbinden der Werkstücke erhalten bleiben, so dass wiederum Feuchtigkeit zwischen die Werkstücke eindringen kann. Eine Dichtigkeit zwischen den Werkstücken ist somit nicht gegeben. Darüber hinaus ist erforderlich, dass die Ausgestaltung solcher Überlappstöße bzw. deren benachbarten Bereiche an die Ausbildung der Entgasungskanäle anzupassen sind, damit diese gewünschte Wirkung eintritt. Des weiteren ist bei diesem Verfahren empfehlenswert, dass eine Aushärtung des Klebstoffs vor dem stoffschlüssigen Verbinden der Werkstücke vorliegt, da ansonsten ein Hineinfließen des Klebemittels in das Schmelzbad erfolgt und das Risiko einer nachteiligen Porenbildung und Bildung von Schmelzauswürfen gegeben wäre.

Aus der US 6,359,252 B1 ist des weiteren ein Verfahren zum Schweißen von beschichteten Blechen mittels eines Energiestrahles bekannt geworden, bei weichem eine Entgasung durch das Schmelzbad erfolgen soll, welches im Einwirkbereich des Energiestrahles erzeugt wird. Hierfür ist vorgesehen, dass während dem stoffschlüssigen Verbinden der Bleche ein Kanal zwischen den Blechen ausgebildet wird, der einen Zwischenraum zwischen den miteinander zu verbindenden Werkstücken zum Abströmen des Dampfes in das Schmelzbad bildet, Damit ein Dampf nicht zwischen die Bleche entweicht, müssen diese zusammengepresst werden. Darüber hinaus ist ein weiterer Energiestrahl vorgesehen, der eine in dem Schmelzbad sich bildende Dampfblase im aufgeschmolzenen Schweißmaterial aufsticht, um ein Entweichen des Gases zu ermöglichen. Dieses Verfahren erfordert eine sensible und aufwendige Sensorik, sowie einen hohen apparativen Aufwand, um während der Einwirkdauer des Energiestrahles zur Erzeugung einer stoffschlüssigen Verbindung im Einwirkbereich gleichzeitig ein Aufstechen einer Dampfblase zu erzielen. Zudem weist ein solches Verfahren den Nachteil auf dass eine hohe Prozesskomplexität erforderlich ist, um die Dampfblase im Schmelzbad zu generieren und anschließend aufzustechen, sowie nach dem Ausgasen der Dampfblase diesen Hohlraum im Schmelzbad wieder zu verschließen.

Der Erfindung liegt deshalb die Aufgabe zugrunde, ein Verfahren zur Fixierung strukturgeklebter Werkstücke mittels eines Energiestrahles vorzuschlagen, welches eine Reduzierung der Prozessdauer ermöglicht und bei dem eine Dichtigkeit zwischen den zu verbindenden Werkstücken aufrechterhalten wird.

Diese Aufgabe wird erfindungsgemäß durch die Merkmale des Anspruchs 1 gelöst. Bei diesem Verfahren wird eine Klebemittelschicht mit einer Viskosität eingesetzt, bei der ein Eintritt des verdampften Klebemittels im Einwirkbereich während der Einwirkdauer des Energiestrahles in einen an den Einwirkbereich angrenzenden Bereich der Klebemittelschicht zwischen den Werkstücken verhindert wird. Durch die Einstellung der Viskosität der Klebemittelschicht kann erzielt werden, dass die Ausbildung von Poren und/oder Entgasungskanälen in der Klebemittelschicht zwischen den Werkstücken vermieden wird. Gleichzeitig wird erzielt, dass das entstehende Gas in das Schmelzbad übergeführt und über einen darin aufrecht zu erhaltenen Dampfkanal abgeführt wird. Dadurch kann eine hohe Dichtigkeit der durch das Strukturkleben zu verbindenden Werkstücke, insbesondere im Überlappstoß oder Überlappbereich der Werkstücke erzielt werden. Gleichzeitig wird sichergestellt, dass ein an den Einwirkbereich des Energiestrahles angrenzender Bereich abgedichtet bleibt, so dass unmittelbar an den Einwirkbereich angrenzend eine abdichtende Klebemittelschicht vorgesehen ist. Des weiteren wird durch die Aufrechterhaltung eines Dampfkanals im Schmelzbad erzielt, dass die Ausbildung einer Dampfblase verhindert wird. Dadurch ist eine Nachbehandlung oder zusätzliche Behandlung des Schmelzbades durch Aufstechen mittels eines zweiten Energiestrahles nicht erforderlich.

Nach einer weiteren bevorzugten Ausgestaltung der Erfindung ist vorgesehen, dass vor oder während dem Aushärten der Klebemittelschicht zwischen den miteinander zu verbindenden Werkstücken der Energiestrahl auf einen Einwirkbereich zum stoffschlüssigen Verbinden der Werkstücke gerichtet wird. Dadurch kann eine hohe Prozessgeschwindigkeit in der Fügetechnik erzielt werden, wobei die Vorteile zur Fixierung strukturgeklebter Werkstücke aufrecht erhalten bleiben. Zudem werden die Werkstücke bei Einsatz des Energiestrahls vor Beginn der Aushärtephase zu fixiert, dass sie sich während der Aushärtephase nicht mehr relativ zueinander verschieben können.

Nach einer weiteren vorteilhaften Ausgestaltung des Verfahrens ist vorgesehen, dass der Dampfkanal im Schmelzbad bis zum Erreichen des kritischen Gasdruckes der verdampfenden Klebemittelschicht aufrechterhalten wird. Dadurch wird sichergestellt, dass eine Ausbildung von Schmelzauswürfen im Schmelzbad verhindert wird. Gleichzeitig wird sichergestellt, dass die Bildung von Entgasungskanälen und/oder Poren in einem an den Einwirkbereich anschließenden Bereich der Klebemittelschicht unterbleibt.

In und entlang des Einwirkbereiches des Energiestrahles zum stoffschlüssigen Verbinden der Werkstücke wird bevorzugt eine durchgehende Klebemittelschicht vorgesehen. Dadurch kann eine hohe Dichtigkeit insbesondere im Überlappstoß der durch Strukturkleben miteinander zu verbindenden Werkstücke erzielt werden.

Nach einer weiteren vorteilhaften Ausgestaltung des Verfahrens ist vorgesehen, dass im Schmelzbad durch die Einwirkdauer und Intensität des Energiestrahls ein Gasdruck gebildet wird, der ein Nachfließen der Klebemittelschicht in das Schmelzbad auf ein Minimum reduziert oder verhindert. Dadurch wird die Verunreinigung des Schmelzbades zumindest reduziert oder verhindert.

Durch die Ausbildung der den Gasdruck aufnehmenden Viskosität des Klebemittels einerseits und der Aufrechterhaltung des Dampfkanals zumindest während der Einwirkdauer des Energiestrahles wird des weiteren erzielt, dass in einem an den Einwirkbereich angrenzenden Bereich ein Gasdruck aufgebaut wird, der verhindert, dass die Klebemittelschicht infolge eines temperaturbedingten Viskositätsabfalls in den Einwirkbereich des Energiestrahles nachfließt und das Schmelzbad durch zusätzliche Verbrennungsrückstände verunreinigt.

Die Einwirkdauer des Energiestrahles auf einen Einwirkbereich ist bevorzugt auf eine Einwirkdauer von maximal einer Sekunde begrenzt. Besonders bevorzugt wird eine Einwirkdauer von wenigen zehntel Sekunden vorgesehen. Durch diese kurze Prozessdauer wird ermöglicht, dass die Zeit zum Aufbau des Gasdruckes verringert ist und der Gasdruck minimiert wird. Darüber hinaus kann der Bereich des temperaturbedingten Viskositätsabfalls um den Schweißbereich herum gering gehalten werden. Der hierdurch auch resultierende größere Temperaturgradient unterstützt zudem die Vermeidung von Entgasungskanälen im Klebemittel und trägt somit zur Entgasung durch das Schmelzbad bei.

Nach einer vorteilhaften Ausgestaltung des Verfahrens ist vorgesehen, dass ein Laserstrahl für den einwirkenden Energiestrahl eingesetzt wird. Durch den Einsatz des Laserstrahles wird deutlich weniger Klebemittelschicht zerstört als bei weiteren Schweißverfahren, die jedoch dem Grunde nach ebenfalls zum Einsatz kommen können. Die Schweißung kann bevorzugt mit einem fokussierten oder defokussierten Laserstrahl erfolgen. Des weiteren können nachgeschaltete Laserprozessschritte vorgesehen sein. Die Laserschweißung kann sowohl mittels eine gepulsten, als auch mit einem cw-Lasergerät erfolgen.

Des weiteren kann vorteilhafterweise vorgesehen sein, dass die stoffschlüssige Verbindung zwischen den zumindest zwei Werkstücken durch eine Punktschweißung, Nahtschweißung oder Steppnahtschweißung hergestellt wird. Denkbar ist auch die Generierung von Nahtschweißungen aus einer Vielzahl von Steppnähten oder auch Punktschweißungen. Dabei werden die einzelnen Prozessparameter auf die Stärke der Werkstücke, das Material der Werkstücke, als auch der Geometrie und Ausgestaltung der Überlappstöße angepasst.

Die Klebemittelschicht kann bevorzugt mit Füllkörpern versehen werden. Dadurch können die in einem Überlappstoß zueinander angeordneten Werkstücke mit einem vordefinierten Spiel oder Abstand zueinander positioniert werden.

Vorteilhafterweise wird bei einer Durchschweißung von zumindest zwei zueinander benachbarten und zu verbindenden Werkstücken der Dampfkanal zur Ober- oder Unterseite des Werkstückverbundes ausgerichtet. Dadurch kann das Entweichen des Gases sowohl über die Ober- oder Unterseite erfolgen, so dass in Abhängigkeit der zu fertigenden Geometrie die Ausrichtung des Dampfkanals ausgebildet sein kann.

Alternativ ist vorgesehen, dass bei einer Einschweißung von zumindest zwei zueinander benachbarten Werkstücken der Dampfkanal zur Oberseite des werkstückes ausgerichtet ist, auf die der Energiestrahl einwirkt. Somit kann eine hinreichende Entgasung sichergestellt und die Vermeidung von Entgasungskanälen zwischen den miteinander zu verbindenden Werkstücken in der Klebemittelschicht verhindert werden.

Eine vorteilhafte Ausführungsform des Verfahrens sieht vor, dass ein großer Temperaturgradient zwischen dem Einwirkbereich des Energiestrahles und dem daran angrenzenden Bereich durch eine verkürzte Prozessdauer erzielt wird. Dadurch wird verhindert, dass die an das Schmelzbad angrenzenden Bereiche sich erwärmen und verdampfen, wodurch ein sehr kleiner Übergangsbereich zwischen dem Schmelzbad und den zu verbindenden Werkstücken geschaffen wird. Dadurch kann die Klebemittelschicht bis an das Schmelzbad angrenzend ausgebildet werden und eine Abdichtung des Zwischenraumes bilden.

In einer besonders bevorzugten Ausführungsform können Prozessparameter, wie beispielsweise die Laserleistung, Vorschubgeschwindigkeit u. dgl., von vergleichbaren Scheißgeometrien durch die Anpassung der E-nergiestrahleinwirkdauer sowie der Wahl des Klebemittels direkt übernommen werden. Eine Anpassung der Prozessparameter und somit entsprechende Aufwände entfallen.

Zur Durchführung des erfindungsgemäßen Verfahrens werden bevorzugt Werkstücke eingesetzt, welche eine zinkbeschichtung ein- oder beidseitig aufweisen. Insbesondere im Fahrzeugbau werden zinkbeschichtete Bleche verwendet, die eine hohe Korrosionsbeständigkelt aufweisen müssen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindurigsgemäß angewandt werden. Es zeigen:
- Figur 1a: eine schematische Schnittdarstellung von zwei mit-einander zu verbindenden Werkstücken während eines Arbeitsprozesses bei der Einbringung einer Einschweißung
- Figur 1b: eine schematische Schnittdarstellung von zwei miteinander zu verbindenden Werkstücken während eines Arbeitsprozesses bei der Einbringung einer Einschweißung unter Verwendung einer Klebemittelschicht mit Füllkörper,
- Figur 2: eine schematische Schnittdarstellung von zwei miteinander zu verbindenden Werkstücken gemäß Figur 1 nach der Durchführung des Verfahrens,
- Figur 3: eine schematische Schnittdarstellung von zwei miteinander zu verbindenden Werkstücken nach Durchführung des Verfahrens, bei dem eine Durchschweiβung erzeugt wird.

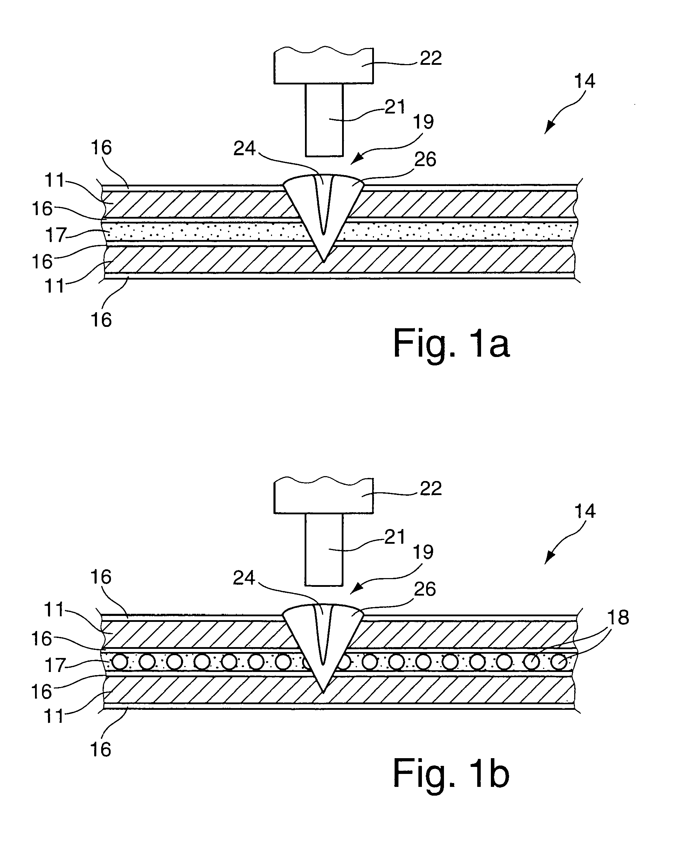

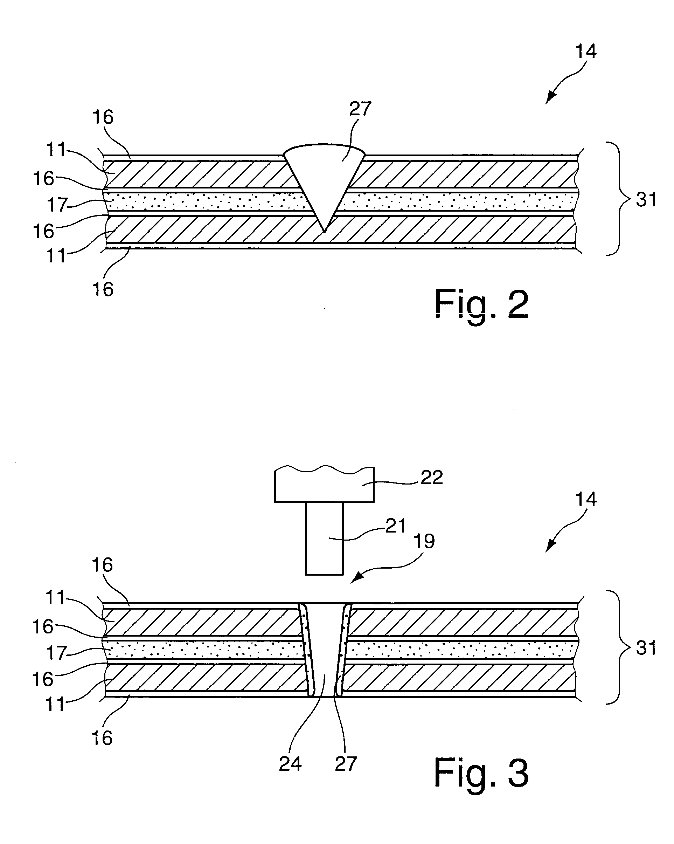

Das erfindungsgemäße Verfahren zum Fixieren von strukturgeklebten Werkstücken 11, 12 wird anhand eines ersten Ausführungsbeispiels gemäß den Figuren 1a, b und 2 näher beschrieben.

Bei der Herstellung von beispielweise Karosserieteilen sind die Werkstücke 11 und 12 als Bleche ausgebildet. Diese Werkstücke 11 und 12 können unbeschichtet, einseitig oder beidseitig beschichtet vorgesehen sein. Im Ausführungsbeispiel sind beispielhaft beidseitig beschichtete Werkstücke 11 und 12 dargestellt. Bevorzugt ist im Fahrzeugbau eine ein- oder beidseitige Zinkbeschichtung vorgesehen.

Die Figur 1a zeigt einen durch die Werkstücke 11 und 12 gebildeten Überlappstoß 14. Die Werkstücke 11 und 12 sind mit einer Klebemittelschicht 17 zueinander verbunden. Zur Positionierung und Vorfixierung der Werkstücke 11 und 12 bis zum vollständigen Aushärten der Klebemittelschicht 17 wird eine stoffschlüssige Verbindung 27 hergestellt (Fig. 2).

Im Ausführungsbeispiel gemäß Figur 1a sind beispielhaft nur zwei miteinander zu verbindende Werkstücke 11 und 12 dargestellt. In einem solchen Überlappstoß 14 können auch mehrere Lagen von Werkstücken 11,12 miteinander verbunden werden.

Die stoffschlüssigen Verbindungen 27 zwischen den Werkstücken 11 und 12, die in den Einwirkbereichen 19 durch einen Energiestrahl 21 erzeugt werden, erfolgen vor oder während einer Aushärtephase der Klebemittelschicht 17. Dadurch wird erzielt, dass die stoffschlüssigen Verbindungen 27 in den Einwirkbereichen 19 eine Vorfixierung der Werkstücke 11 und 12 ermöglichen, so dass während der fehlenden Anfangsfestigkeit der Klebemittelschicht 17 eine Vorfixierung der Werkstücke 11,12 zueinander bis zum vollständigen Aushärten der Klebernittelschicht ermöglicht ist.

Der auf den Einwirkbereich 19 einwirkende Energiestrahl 21 ist als Laserstrahl ausgebildet. Die Laserparameter für den Laserstrahl werden in Abhängigkeit der Werkstoffe und/oder der Dicke der Werkstücke 11, 12, der gegebenenfalls vorliegenden Beschichtungen 16 und der Klebemittelschicht 17 ausgewählt. Darüber hinaus werden die Laserparameter in Abhängigkeit der herzustellenden Schweißgeometrie ausgewählt. Beispielsweise kann die Schweißgeometrie durch eine Punktschweißung gebildet werden, wobei eine solche Punktschweißung in Form einer Einschweißung oder einer Durchschweißung ausgebildet sein kann. Alternativ kann eine Naht- oder Steppnahtschweißung vorgesehen sein.

Die zum Einsatz kommende Klebemittelschicht 17 wird im Hinblick auf deren Eigenschaften auf den Anwendungsbereich und Einsatzfall der Werkstücke 11 und 12 angepasst. Beispielsweise im Fahrzeugbau ist erforderlich, dass solche Klebemittelschichten mehrere Eigenschaften aufweisen und Funktionen übernehmen müssen, wie beispielsweise die Haltbarkeit, Steifigkeit, die Crashtauglichkeit oder dergleichen.

In Figur 1b ist eine analoge Anordnung von Werkstücken 11, 12 in einem Überlappstoß 14 zu Figur 1a dargestellt. Abweichend von Figur 1a wird gemäß der Ausführungsform in Figur 1b eine Klebemittelschicht 17 verwendet, welche Füllkörper 18 umfasst. Diese Füllkörper 18 können beispielsweise aus Glaskugeln oder sonstigen Teilchen, als auch Partikeln bestehen, die eine vorbestimmte Körnung oder Größe aufweisen, um ein Spaltmaß zwischen den Werkstücken 11, 12 einzustellen. Ein solcher zwischen den beschichteten Werkstücken 11 und 12 geschaffener Spalt weist den Vorteil auf, dass die Beschichtung im Einwirkbereich des Energiestrahles und des unmittelbar daran angrenzenden Bereiches entgasen kann.

Das Verfahren zur Fixierung von geklebten Werkstücken 11, 12 mittels Energiestrahl 21, insbesondere eines Laserstrahls, erfolgt durch folgende Schritte:

Die Werkstücke 11 und 12 werden nach dem Aufbringen von einer Klebemittelschicht 17 auf einer oder beiden Werkstückoberseiten zueinander positioniert und bilden einen Überlappstoß 14. Anschließend wird eine Energiequelle 22 zur Ausgabe des Energiestrahls 21 zum Überlappstoß 14 positioniert, um die Schweißgeometrie zum Stoffschlüssigen Verbinden der Werkstücke 11 und 12 einzubringen. Der Energiestrahl 21 wirkt auf den Einwirkbereich 19 ein, wobei das Werkstück 11 und 12 zusammen mit dem dazwischen liegenden Klebemittel 17 lokal verdampft. Die Prozessdauer zum Einbringen des Energiestrahles 21 erfolgt nur in kurzer Zeit und ist auf 1 s, insbesondere auf wenige Zehntelsekunden, begrenzt. Dadurch wird nur ein geringer Bereich der Klebemittelschicht 17 zerstört. Gleichzeitig wird der Energiestrahl 21 derart gesteuert, dass während der Verdampfungsphase der Dampfkanal 24 aufrecherhalten bleibt, damit der abströmende Dampf vollständig aus dem Schmelzbad 26 entweichen kann.

Im Ausführungsbeispiel gemäß Figur 1 ist eine sogenannte Einschweißung dargestellt. Der Laserstrahl durchdringt nicht vollständig beide Werkstücke 11 und 12, Dadurch ist der Dampfkanal 24 in Richtung auf den einwirkenden Energiestrahl 21 ausgerichtet. Als ein Laserparameter für den Laserstrahl ist bevorzugt vorgesehen, dass eine Pulsleistung von mindestens 2 kW vorgesehen ist. Bevorzugt sind 4 kW oder eine höhere Pulsleistung vorgesehen, um den Energieeintrag kurz zu halten. Dadurch kann auch der Temperaturgradient zwischen dem Einwirkbereich des Laserstrahls und des daran angrenzenden Bereichs hinreichend groß ausgebildet werden.

Grundsätzlich ist es möglich, dass nach dem Einbringen der stoffschlüssigen Verbindung 27 weitere nachgeschaltete laserprozessschritte ermöglicht sind. Solche Laserprozessschritte können die Schweißung gegebenenfalls durch den Laserstrahl noch glätten, wobei zusätzliche Passagen mit veränderten Laserparametern erfolgen können, wie beispielsweise Laserleistung, Vorschub, Fokussierung, Defokussierung oder dergleichen. Diese Laserprozessschritte stehen vor dem Hintergrund, eine dichte Schweißnaht zu erzielen und Nahtunregelmäß gkeiten auszugleichen.

Die verwendete Klebemittelschicht 17 weist eine Viskosität auf, welche einem bei einer Temperaturbelastung entstehenden Gasdruck im Dampfkanal bzw. daran angrenzend nicht nachgibt. Dadurch wird verhindert, dass in einem unmittelbar an das Schmelzbad 26 angrenzenden Bereich eine Ausbildung von Entgasurigskanälen oder Poren verhindert wird. Gleichzeitig wird dadurch bewirkt, dass das sich bildende Gas über das Schmelzbad 26 bzw. des ausgebildeten Dampfkanals 24 abgeführt.

Die zum Einsatz kommenden Klebemittel zur Bildung der Klebemittelschicht 17 werden durch eine Abhängigkeit der Viskosität zur Scherrate definiert. Ein Standardklebemittel weist beispielsweise eine Viskosität von 1.500 Pas bei einer Scherrate von 0,1 1/s auf. Es können Klebemittel zum Einsatz kommen deren Viskosität im Bereich !von 50 bis 15.000 Pas liegt. Optimierte Klebemittel weisen beispielsweise eine Viskosität von 3.500 bis 6.500 Pas bei einer Scherrate von 0,1 1/s auf.

Die Herstellung von Steppnähten, bei denen eine Steppnaht bzw. ein Schweißpunkt weniger als 0,5 sec. an Zelt erfordert, ermöglicht eine sehr hohe Verarbeitungsrate zum Vorfixieren der Werkstücke 11, 12 im Überlappstoß 14.

Für die Werkstücke werden besonders bevorzugt verzinkte Stahlbleche, aber auch Aluminiumlegierungen mit oder ohne Plattierung eingesetzt. Des weiteren können weiterentwickelte hochfeste Stähle (AHSS=Advanced high strengh steel) eingesetzt wenden. Diese weisen insbesondere den Vorteil auf, dass ein nachhärtender Effekt durch die einwirkende Temperatur bei der Herstellung der stoffschlüssigen Verbindung entsteht, wodurch eine Aussteifung des Überlappstoßes bei insbesondere reduzierter Materialstärke ermöglicht ist. Gleichzeitig können langlebige Verbindungen mit einer hohen dynamischen Ermüdungs- und Festigkeitsraten erzielt werden.

Die Figur 2 zeigt einen Werkstückverbund 31 nach dem Durchführen des erfindungsgemäßen Verfahrens. Die beiden Werkstücke 11 und 12 sind durch eine als Einschweißung ausgebildete stoffschlüssige Verbindung 27 zueinander vorfixiert und durch eine Klebemittelschicht 17 nach deren vollständigen Aushärtung fest miteinander verbunden, Die Vorfixierung der Werkstücke 11 und 12 durch einzelne oder eine Gruppe von Schweißpunkten oder Schweißnähten als auch einer durchgehenden Schweißnaht im Überlappstoß 14 durch Schweißen, insbesondere Laserstrahlschweißen, ermöglicht kurze Prozesszeiten. Durch diese Vorfixierung können bereits nachfolgende Arbeitsschritte eingeleitet werden, ohne dass ein vollständiges Aushärten der Klebemittelschicht 17 erforderlich ist.

In Figur 3 ist eine alternative Ausgestaltung des Verfahrens zur Verbindung der Werkstücke 11 und 12 dargestellt. Anstelle einer Einschwei-ßung ist als stoffschlüssige Verbindung 27 eine Durchschweißung durch die beiden Werkstücke 11 und 12 vorgesehen, wobei die Ränder der Durchschweißung miteinander verschweißt sind. Bei einer Durchschwei-ßung kann der Dampfkanal 24 sowohl nach oben, als auch nach unten ausgerichtet und ausgebildet sein. Im übrigen gelten die Ausführungen zu den Figuren 1 und 2.

Durch die erfindungsgemäße Ausgestaltung des Verfahrens wird ermöglicht, dass ein dichter Überlappstoß 14 sowie ein Anstieg in der Prozessgeschwindigkeit unter Beibehaltung der erforderlichen Leistungsparameter, wie beispielsweise Steifigkeit und Festigkeit der gefügten Werkstücke 11, 12, erzielt wird.

## Patentansprüche

1. Verfahren zur Fixierung strukturgeklebter Werkstücke (11, 12) mittels eines Energiestrahles (21), zwischen denen zumindest eine Klebemittelschicht (17) vorgesehen Ist, deren Verdarhpfungstemperatur unterhalb der Schmeiztemperatur des Materials der Werkstücke (11, 12) liegt, **dadurch gekennzeichnet, dass** während einer Verdampfungsphase des Klebemittels (17) im Einwirkbereich (19) des Energiestrahles (21) ein Dampfkanal (24) im Schmelzbad (26) zum Ausströmen eines Dampfes aufrechterhalten wird, dass zumindest die im Einwirkbereich (19) sich befindende Klebemittelschicht (17) verdampft und durch den Dampfkanal (24) abgeführt wird und dass die Klebemittelschicht (17) mit einer Viskosität eingestellt wird, bei der aufgrund des Gasdruckes im Dampfkanal (24) ein Eintritt des verdampften Materials in die zwischen den Werkstücken (11, 12) vorgesehene Klebemittelschicht (17) verhindert wird.

2. Verfahren nach Anspruch 1, **dadurch gekennzeichnet, dass** vor oder während dem Aushärten der Klebemittelschicht (17) der Energiestrahl (21) auf den Einwirkbereich (19) zum stoffschlüssigen Verbinden der Werkstücke (11, 12) gerichtet wird.

3. Verfahren nach Anspruch 1 oder 2, **dadurch gekennzeichnet, dass** der Dampfkanal (24) im Schmelzbad (26) bis zum Erreichen des kritischen Gasdruckes der verdampfenden Klebemittelschicht (17) aufrechterhalten wird.

4. Verfahren nach einem der vorherigen Ansprüche, **dadurch gekennzeichnet, dass** in und entlang des Einwirkbereiches (19) des Energiestrahles (21) zum stoffschlüssigen Verbinden der zumindest zwei Werkstücke (11, 12) eine durchgängige Klebemittelschicht (17) vorgesehen wird.

5. Verfahren nach einem der vorherigen Ansprüche, **dadurch gekennzeichnet, dass** im Schmelzbad (26) durch den Energiestrahl (21) ein Gasdruck gebildet wird, der ein Nachfließen der Klebemittelschicht (17) aus dem angrenzenden Bereich in das Schmelzbad (26) auf ein Minimum reduziert oder verhindert.

6. Verfahren nach einem der vorherigen Ansprüche, **dadurch gekennzeichnet, dass** die Einwirkdauer des Energiestrahles (21) auf die zumindest zwei Werkstücke (11, 12) auf maximal eine Sekunde begrenzt ist und bevorzugt zur Einwirkung von wenigen zehntel Sekunden angesteuert wird.

7. Verfahren nach einem der vorherigen Ansprüche, **dadurch gekennzeichnet, dass** ein gepulster oder cw-Laserstrahl als einwirkender Energiestrahl (21) eingesetzt wird.

8. Verfahren nach einem der vorherigen Ansprüche, **dadurch gekennzeichnet, dass** die stoffschlüssige Verbindung zwischen den zumindest zwei Werkstücken (11, 12) durch eine Punktschweißung, Nahtschweißung oder Steppnahtschweißung hergestellt wird.

9. Verfahren nach einem der vorherigen Ansprüche, **dadurch gekennzeichnet, dass** die Klebemittelschicht (17) mit Füllkörpern, insbesondere Glaskugeln, versehen wird.

10. Verfahren nach einem der vorherigen Ansprüche, **dadurch gekennzeichnet, dass** bei einer Durchschweißung von zumindest zwei einander zugeordneten Werkstücken (11, 12) der Dampfkanal (24) zur Ober- oder Unterseite eine aus den zumindest zwei Werkstücken (11, 12) bestehenden Werkstückverbundes (31) ausgerichtet wird.

11. Verfahren nach einem der Ansprüche 1 bis 9, **dadurch gekennzeichnet, dass** bei einer Einschweißung in zumindest zwei einander zugeordneten Werkstücken (11, 12), der Dampfkanal (24) zur Oberseite des Werkstückes (11, 12) ausgerichtet wird, auf die der Energiestrahl (21) einwirkt.

12. Verfahren nach einem der vorherigen Ansprüche, **dadurch gekennzeichnet, dass** ein großer Temperaturgradient zwischen dem Einwirkbereich des Energiestrahls (21) und dem daran angrenzenden Bereich durch eine verkürzte Prozessdauer erzielt wird.

13. Verfahren nach einem der vorherigen Ansprüche, **dadurch gekennzeichnet, dass** die Parameter aus Schweißungen von in einem Überlappstoß (14) angeordneten Werkstücken (11, 12) ohne Klebemittelschicht (17) und/oder Beschichtung (16) direkt durch Anpassung der Prozessdauer übernommen werden.

14. Verfahren nach einem der vorherigen Ansprüche, **dadurch gekennzeichnet, dass** die Werkstücke (11, 12) beschichtet sind, insbesondere eine Beschichtung (16) aus Zink aufweisen.

15. Verfahren nach Anspruch 8, **dadurch gekennzeichnet, dass** die Nahtschweißung aus einer Vielzahl von Steppnähten oder Punktschwei-Bungen hergestellt wird.
